# EUROPEAN PATENT APPLICATION

(11) **EP 4 501 885 A1**
(43) Date of publication of application: **05.02.2025**
(21) Application number: 23774606.0
(22) Date of filing: 10.03.2023
(51) Int. Cl.: C04B 35/484, C04B 35/657, F27D 1/00

(54) **HIGH-ZIRCONIA ELECTRO-FUSED CAST REFRACTORY MATERIAL**

(30) Priority: 25.03.2022 JP 2022050192
(71) Applicant: Saint-Gobain TM K.K., Tokyo 102-0083 (JP)
(72) Inventor: AKAMATSU, Hayato, Tokyo 102-0083 (JP); ABE, Koya, Tokyo 102-0083 (JP); SUGIYAMA, Hiroshi, Tokyo 102-0083 (JP); HASHIMOTO, Itaru, Tokyo 102-0083 (JP)
(74) Representative: Patentanwälte Ruff, Wilhelm, Beier, Dauster & Partner mbB
(86) International application number: PCT/JP2023/009390
(87) International publication number: WO 2023/182007

(57) **Abstract**

An object of the present invention is to provide a high zirconia electrically-fused cast refractory which suppresses the joint opening at a contact site between refractories, suppresses the formation of zircon crystals, does not extremely increase the residual volume expansion rate even when zircon crystals are formed, and has high corrosion resistance from glass; and the present invention relates to a high zirconia electrically-fused cast refractory, wherein, as chemical components: the sum of ZrO₂ and HfO₂ is more than 80% by mass and 92% by mass or less, Al₂O3 is 0.2 to 3.0% by mass, SiO₂ is 1.5 to 10% by mass, Na₂O is 0.05 to 2.0% by mass, K₂O is 1.0% by mass or less, B₂O₃ is 0 to 1.5% by mass, Y₂O₃ is more than 4.0% by mass and 9.0% by mass or less, the sum of MgO and CaO is 0.02 to 0.4% by mass, CaO is 0.01% by mass or more, the sum of Fe203 and TiO2 is 0.5% by mass or less, P₂O₅ content is 0.04% by mass or less.

## Description

### [Technical Field]

The present invention relates to a high zirconia electrically-fused cast refractory suitable for use in glass melting furnaces.

### [Background Art]

As a refractory for a glass melting furnace, an electrically-fused cast refractory (hereinafter, it may also be referred to as a "refractory" in short) has been widely used.

The electrically-fused cast refractory is a refractory which is produced by melting a raw material mixture of predetermined amounts of major components, such as alumina, silica and zirconia, and minor components, such as soda and boric acid, in an electric arc furnace; casting the melt in a refractory mold; ; cooling in an annealing material together with the mold; and solidifying it into the shape of the mold, wherein the refractory has a dense structure and excellent corrosion resistance against molten glass.

Since the electrically-fused cast refractory is manufactured through the process of casting a melt in a mold, the manufacturing method thereof is different from a sintered refractory which is produced through a process of sintering and bonding between crystal particles; further, technical development means and methods and solutions and methods of the sintered refractory cannot be used for the electrically-fused cast refractory, and vice versa.

As one of such an electrically-fused cast refractory, a high zirconia electrically-fused cast refractory containing 85% by mass or more of ZrO₂ has been generally used.

The high zirconia electrically-fused cast refractory has low solubility in glass, contains ZrO₂ as the main component which has a high melting point, has higher ZrO₂ content, and has dense texture, and therefore it has high corrosion resistance to all types of molten glass.

Further, the high zirconia electrically-fused cast refractory is characterized in that it hardly brings about defects such as stones and cords in the molten glass, since it does not form a reaction layer at the interface with the molten glass.

Therefore, the high zirconia electrically-fused cast refractory is a refractory which is particularly suitable for producing high quality glass.

The mineral structure of the high-zirconia electrically-fused cast refractory is mostly composed of monoclinic ZrO₂ crystals, and a small amount of glass phase fills the grain boundaries of the ZrO₂ crystals.

The small amount of the glass phase differs greatly from the composition of glass used in the glass industry; is a very SiO₂ rich glass; is melted together with the high content of ZrO₂; and undergoes a step of casting in a mold. Therefore, the technical development means and methods and solutions and methods of the glass industry cannot be used for the electrically-fused cast refractory, and vice versa.

The glass phase of the high-zirconia electrically-fused cast refractory is generally composed of oxides such as Al₂O₃, SiO₂, Na₂O, B₂O₃, P₂O₅.

Further, ZrO₂ crystals composing most of the high zirconia electrically-fused cast refractory undergoes a reversible transformation of monoclinic and tetragonal crystal phases, which is accompanies by an abrupt volume change in the vicinity of 1000°C. (at the time of temperature drop) to 1150°C. (at the time of temperature rise).

The stress generated from the volume change associated with the transformation of ZrO₂ crystals is mitigated by the flowability of the glass phase filling ZrO₂ grain boundaries, which makes it possible to produce, in an industrial level, a high zirconia electrically-fused cast refractory having a ZrO₂ content of 93 to 94 % by mass without causing cracks at the time of production and at the time of temperature rise. Such a refractory is commercially available.

However, when the high zirconia electrically-fused cast refractory is used in the glass industry, the reversible transformation of monoclinic and tetragonal crystal phases of ZrO₂ crystal which is accompanied by an abrupt volume change in the vicinity of 1000 °C. (at the time of temperature drop) to 1150°C. (at the time of temperature rise) greatly affects the glass melting furnace.

In other words, the high zirconia electrically-fused cast refractory expands during temperature rise and undergoes transformation from monoclinic to tetragonal in the temperature range of phase transformation of ZrO₂ crystals, which is accompanied by an abrupt volume shrinkage. Thereafter, the refractory expands as the temperature further rises. However, in the temperature range of the operation of a glass-melting furnace, the expansion did not exceed the maximum expansion of monoclinic crystal in the temperature range of phase transformation of ZrO₂ crystals.

Thus, in a typical high zirconia electrically-fused cast refractory, during the operation of a glass melting furnace, a temperature distribution occurs between the face of the inner-furnace side, which reaches a maximum temperature (typically 1300°C. to 1700°C.) and in contact with the molten glass, and the face of the outer-side, which is in contact with the atmosphere of the outside of the glass melting furnace (or an insulator). The maximum expansion occurs between these two faces.

In other words, ZrO₂ crystals shrink due to the transformation of the crystal phase from monoclinic to tetragonal at the time of temperature rise. Therefore, the refractory exhibits, at the inner-furnace-side portion which is in contact with the molten glass, a lower expansion rate than the maximum expansion.

In a glass melting furnace using the refractory in combination, if the inner-furnace-side portion in contact with the molten glass has an expansion rate lower than the maximum expansion, a site called "joint" is slightly opened, wherein this site (joint) is a contact site between refractories.

When this joint, which is a contact site between refractories, is open, the flow velocity of glass in the vicinity of the joint changes, so that the erosion of a refractory by glass is accelerated.

Further, when the high zirconia electrically-fused cast refractory is heated alone or when it is subjected to thermal cycles across a temperature range of the reversible transformation of monoclinic and tetragonal crystal phases of ZrO₂ crystal which is accompanied by an abrupt volume change in the vicinity of 1000 °C. (at the time of temperature drop) to 1150 °C. (at the time of temperature rise), the main components of the glass phase of a refractory, i.e., silica (SiO₂) and zirconia (ZrO₂) crystals, may react to form zircon (ZrO₂·SiO₂) crystals.

When subjected to heat or thermal cycles, zircon crystals are formed at the interface between ZrO₂ crystals and glass phase filling the crystal grain boundaries, or are formed in the glass phase, so that the formation of zircon crystals leads to a relative reduction of the glass phase. Further, if the reduction of the glass phase progresses due to the formation and growth of zircon crystals, the glass phase can hardly absorb an abrupt volume change of ZrO₂ crystal in the vicinity of 1000 °C. to 1150 °C., leading to the reduction in the strength of the refractory, and it becomes more prone to cracking.

In this case, erosion occurs selectively from the cracked portions. Further, when the erosion progresses, crystals constituting the high zirconia electrically-fused cast refractory are contaminated in the molten glass, which may lead to a decrease in the quality of glass.

Therefore, in the operation of a glass melting furnace, in order to perform stable operation over a long period of time and maintain stable glass quality, it is very important to suppress the formation of zircon crystals in the high zirconia electrically-fused cast refractory.

With regard to the above-described site called a "joint", which is a contacting site between refractories, a refractory that suppresses the opening of the joint has been studied conventionally by adding Y₂O₃ to a refractory.

In addition, conventionally, a high zirconia electrically-fused cast refractory which inhibits zircon crystal formation have been studied.

In Patent Document 1, a fused-cast-zirconia-based heat-resistant material for machine is proposed, which is characterized by being composed of a single crystal and/or a polycrystal having, in a molar percentage, 89≤ZrO₂≤99 and 1≤Y₂O₃≤11.

The refractory of Document 1 does not contain SiO₂ and thus does not produce a zircon crystal. However, since it does not contain SiO₂, it is not possible to absorb an abrupt volume change during monoclinic and tetragonal transformation of ZrO₂ crystals, and thus it was difficult to mass-produce the refractory industrially.

In Document 2, a fused zirconia refractory material is proposed which contains calcium oxide as a stabilizer in an amount of 1 to 30wt% and yttrium oxide or a rare earth mineral containing yttrium oxide in an amount of 0.05 to 2wt%.

In the refractory of Document 2, the zircon crystal is not formed because it does not contain SiO₂. However, since it does not contain SiO₂, it is not possible to absorb an abrupt volume change during the monoclinic and tetragonal transformation of ZrO₂ crystals, and thus it was difficult to mass-produce the refractory industrially.

Patent Document 3 proposes a refractory product comprising more than 85% zirconia (ZrO₂), characterized in that it comprises, by weight % on an oxide basis: ZrO₂>92%, SiO₂:2-8%, Na₂O:0.12-1%, Al₂O₃:0.2-2%, 0.5%≤Y₂O₃+CaO≤2.6 %, wherein Y₂O₃:0.3-2%, or CaO:0.5-1.93 %.

In the refractory of Document 3, cracks were generated during production, and it was difficult to manufacture the refractory at a production level. As explained below, it is considered that this is due to the relatively low content of Y₂O₃.

Patent Document 4 proposes a molten and cast-molded refractory comprising, in wt % based on oxide and on the basis of total 100%, ZrO₂:the remainder to 100%, Hf₂O:<5%, SiO₂:2%-10%, 0.9<Y₂O₃+CeO₂+CaO+MgO≤4.0%, B₂O₃: <4.5%, B₂O₃:≥0.09×(Y₂O₃+1/3(CeO₂+CaO+MgO)×SiO₂, Al₂O₃:0.3% to 2.0%, Na₂O+K₂O: <0.5%, P₂O₅:<0.05%, Fe₂O₃+TiO₂:<0.55 %, other species: <1.0%, wherein a Y₂O₃ content is 0.5% or more, or a CeO₂+CaO+MgO content is 2% or more.

The refractory of Document 4 contains a large amount of CaO, MgO. Since these components significantly accelerate the formation of zircon crystals, the generation of cracks may be caused in the refractory due to the increased residual volume expansion after heating caused by the formation of zircon crystals, and as a result, there was a possibility that the strength of the refractory matrix decreases.

Document 5 proposes a melt-cast refractory comprising, as weight percentages based on oxide and on the basis of total 100%, ZrO₂: the remainder to100 %, Hf₂O:<5%, SiO₂:2% to 10%, Y₂O₃:0.4 to 2.0%, CaO:4.0% to 8.0%, B₂O₃+Na₂O+K₂O:0.4 to 3.0%, Al₂O₃:0.3% to 2.0%, P₂O₅:<0.05%, Fe₂O₃+TiO₂:<0.55 %, and other species: <1.5%.

Document 5 contains a large amount of CaO which significantly promotes the formation of zircon crystals. There was a possibility of generation of cracks in the refractory due to the increased residual volume expansion after heating caused by the formation of zircon crystals or the formation of anorthite crystals (CaAl₂Si₂O₈), and as a result, there was a possibility that the strength of the refractory matrix decreases.

Document 6 proposes a molten and cast-molded refractory comprising, in a weight % based on oxide and on the basis of total 100%, ZrO₂: the remainder to 100%, SiO₂:2% to 10%, 0.9<Y₂O₃+CeO₂+CaO+MgO≤4.0%, B₂O₃: <4.5%, B₂O₃≥0.09×(Y₂O₃+1/3(CeO2+CaO+MgO))×SiO2, Al₂O₃:0.3%-2.0 %, and Y₂O₃: >0.8 %, and satisfying the following requirements: HfO₂: <5%, CeO₂:<0.7%, MgO:<0.7%, CaO:<0.7%, Na₂O+K₂O:≤0.5%, P₂O₅:<0.05%, Fe₂O₃+TiO₂:<0.55 %, and amounts of each of species other than ZrO₂, HfO₂, SiO₂, Y₂O₃, CeO₂, CaO, MgO, B₂O₃, Al₂O₃, Na₂O, K₂O, P₂O₅, Fe₂O₃, and TiO2: <0.2%.

In the refractory of Document 6, cracks were generated during production, and it was difficult to mass-produce the refractory industrially. As explained below, it is considered that this may be due to the fact that Y₂O₃ content is 4% or less.

In Patent Document 7, a high zirconia electrically-fused cast refractory is proposed which comprises 85 to 95 wt % of ZrO₂, 0.4 to 2.5 wt % of Al₂O₃, 3.5 wt % to 10 wt % of SiO₂, 0.05 to 1 wt% in total of Na₂O and K₂O, more than 0.04 wt % and 1 wt% or less of B₂O₃, 0.02 wt % or less of P₂O₅, 0.05 wt% or less of MgO, 0.01 to 0.2 wt % of CaO, with regard to SrO and BaO, if only one of them is contained, 0.3 to 3 wt% of SrO or more than 0.5 wt% and 3 wt% or less of BaO, if both of them are contained, 0.3 wt% or more of SrO and 0.3 to 3 wt% in total of SrO and BaO, 0.01 to 0.7 wt% of SnO2, 0.3 wt% or less in total of Fe₂O₃ and TiO₂.

In the refractory of Document 7, since the content of Y₂O₃ is extremely low, the joint opening cannot be suppressed, and the corrosion resistance at the joint site was insufficient.

Document 8 proposes a fused-cast refractory product comprising, as a weight percentage based on the oxide and based on 100% of the sum of the oxides, ZrO₂+HfO₂: the remainder to 100%, wherein Hf₂O≤5%, SiO₂:1.5%-7.5%, Al₂O₃:1.0%-3.0%, CaO+SrO:1.2-3.0%, Y₂O₃:1.5-3.0%, Na₂O+K₂O:<0.15%, B₂O₃:<1.0%, P₂O₅:<0.15%, Fe₂O₃+TiO₂:<0.55%, and oxide species other than ZrO₂, HfO₂, SiO₂, Al₂O₃, Na₂O, K₂O, B₂O₃, CaO, SrO, Y₂O₃, P₂O₅, Fe₂O₃, and TiO2: <1.5%.

In the refractory of Document 8, cracks were sometimes generated, and the manufacturing at a production level was difficult. As explained below, it is considered this may be due to the fact that Y₂O₃ content is 4% or less.

### [Citation List]

### [Patent Literature]

[Patent Document 1] JP S 59-131585A
[Patent Document 2] JP H 4-42813A
[Patent Document 3] JP 2005-526683A
[Patent Document 4] JP 2013-514254A
[Patent Document 5] JP 2015-506898A
[Patent Document 6] JP 2015-212223A
[Patent Document 7] JP 2015-40144A
[Patent Document 8] JP 2018-509363A

### [Summary of Invention]

### [Technical Problem]

Generally, when Y₂O₃ is contained in a high zirconia electrically-fused refractory, most of Y₂O₃ are mixed in ZrO₂ crystal to form a solid solution and part of which is contained in the glass phase of the refractory. In this case, part of ZrO₂ crystals is transformed to tetragonal ZrO₂ due to the formation of the solid solution of Y₂O₃ in ZrO₂ crystal, resulted in a change of characteristics of ZrO₂ crystals. In other words, the temperature of the reversible transformation of monoclinic and tetragonal crystal phases of ZrO₂ crystals which is accompanied by an abrupt volume change in the vicinity of 1000 °C. (at the time of temperature drop) to 1150 °C. (at the time of temperature rise), and therefore the maximal expansion temperature, is shifted to a lower temperature side.

On the other hand, as described above, in a refractory during operation, a temperature distribution occurs between the inner-furnace-side face, which is in contact with the molten glass in the glass melting furnace, and the outer-side face, which is in contact with the atmosphere outside of the glass melting furnace (or a heat insulating material). A normal high zirconia electrically-fused cast refractory exhibits the maximum expansion between these two faces. If the transformation temperature of ZrO₂ crystals is shifted to a lower temperature side, the site of the maximum expansion of the refractory moves toward the face in contact with the atmosphere outside the glass melting furnace (or with an insulating material), and ZrO₂ crystals are transformed into tetragonal at a lower temperature than a typical refractory, and then expand. Therefore, the expansion of the inner-furnace-side portion, which is in contact with the molten glass of the glass melting furnace, becomes the same as, or slightly smaller than, the maximum expansion of the refractory, and consequently, the joint site, which is a contact site between refractories, are closed, or the degree of joint opening is suppressed.

However, if the transformation temperature of ZrO₂ crystal phase is shifted to a lower temperature side, since the viscosity of glass phase is high at a low temperature and since the glass phase is solidified at even lower temperature, there is a possibility that the glass phase cannot mitigate the stress generated by a volume change which accompanies the transformation of ZrO₂ crystals, and a refractory may become more prone to cracking , and it may be difficult to mass-produce the refractory industrially.

Further, if the transformation temperature of ZrO₂ crystal phase is shifted to a larger degree toward a lower temperature side, it becomes more difficult to mitigate the stresses generated by a volume change due to the transformation of ZrO₂ crystals during production of a refractory, and the occurrence of cracks may also be facilitated.

Therefore, it has been considered that it is difficult to increase the Y₂O₃ content in order to obtain a larger degree of transition of the transformation temperature of ZrO₂ crystal phases toward a lower temperature side, so as to produce a high zirconia electrically-fused refractory having good qualities.

Further, when a refractory, wherein a transformation temperature of ZrO₂ crystal phases is shifted to a lower temperature side, is used in a glass melting furnace, if zircon crystals are generated during operation, the state is shifted such that the glass phase is relatively reduced. Further, since the viscosity of glass phase becomes high at a low temperature and since the glass phase is solidified at even lower temperature, if thermal cycles occur due to changes in operating temperature during operation of a glass melting furnace, it become more difficult to absorb an abrupt volume change of ZrO₂ crystals than in the case of a normal high zirconia electrically-fused cast refractory, and there is a possibility that the refractory become more prone to cracking.

Therefore, it was considered that a high-zirconia electrically-fused cast refractory having relatively high content of Y₂O₃ are not suitable for use in a part of a glass melting furnace subjected to thermal cycles due to change in the operating temperature.

Further, if Y₂O₃ content is increased, ZrO₂ content is relatively reduced. Since ZrO₂ content greatly affects the corrosion resistance of a refractory to glass, and the corrosion resistance of a refractory is proportional to ZrO₂ content, it was considered that a refractory having a relatively low ZrO₂ content has an insufficient corrosion resistance.

Therefore, it was considered that a high zirconia electrically-fused cast refractory having increased Y₂O₃ content may have insufficient corrosion resistance in a glass melting furnace.

In such a background, an object of the present invention is to provide an improved high zirconia electrically-fused cast refractory, and in particular, to provide a high zirconia electrically-fused cast refractory which is easy to mass-produce industrially; which suppresses a joint opening at a site called a "joint" which is a contact site between refractories; which also suppresses the formation of zircon crystals; which does not exhibit excessively large residual volume expansion even when zircon crystals are partially formed; which is not prone to crack formation in the refractory when subjected to heating or thermal cycles; and which has high corrosion resistance to glass.

### [Solution to Problem]

Exemplary means to solve the problem of the present invention includes the following high zirconia electrically-fused cast refractories:
<Embodiment 1>
   A high zirconia electrically-fused cast refractory, wherein, as chemical components:
   the sum of ZrO₂ and HfO₂ is more than 80% by mass and 92% by mass or less,
   Al₂O3 is 0.2 to 3.0% by mass,
   SiO₂ is 1.5 to 10% by mass,
   Na₂O is 0.05 to 2.0% by mass,
   K₂O is 1.0% by mass or less,
   B₂O₃ is 0 to 1.5% by mass,
   Y₂O₃ is more than 4.0% by mass and 9.0% by mass or less,
   the sum of MgO and CaO is 0.02 to 0.4% by mass,
   CaO is 0.01% by mass or more,
   the sum of Fe₂O₃ and TiO₂ is 0.5% by mass or less,
   P₂O₅ content is 0.04% by mass or less.
<Embodiment 2>
   The high zirconia electrically-fused cast refractory according to Embodiment 1, wherein, as chemical components:
   the sum of ZrO₂ and HfO₂ is more than 80% by mass and 92% by mass or less,
   Al₂O3 is 0.4 to 2.5% by mass,
   SiO₂ is 1.5 to 7.0% by mass,
   Na₂O is 0.3 to 1.8% by mass,
   K₂O is 1.0% by mass or less,
   B₂O₃ is 0 to 1.0% by mass,
   Y₂O₃ is more than 4.0% by mass and 7.5% by mass or less,
   the sum of MgO and CaO is 0.02 to 0.4% by mass,
   CaO is 0.01% by mass or more,
   the sum of Fe₂O₃ and TiO₂ is 0.5% by mass or less,
   P₂O₅ content is 0.04% by mass or less.
<Embodiment 3>
   The high zirconia electrically-fused cast refractory according to Embodiment 1 or 2, wherein the mass content of Y₂O₃ is 4.5 to 7.5% by mass.
<Embodiment 4>
   The high zirconia electrically-fused cast refractory according to Embodiment 3, wherein the mass content of Y₂O₃ is more than 4.5% by mass and 6.0% by mass or less.
<Embodiment 5>
   The high zirconia electrically-fused cast refractory according to any one of Embodiments 1 to 4, wherein the mass content of SiO₂ is 4.0 to 6.5 % by mass.
<Embodiment 6>
   The high zirconia electrically-fused cast refractory according to any one of Embodiments 1 to 5, wherein the mass content of Al₂O3 is 0.5 to 1.2% by mass.
<Embodiment 7>
   The high zirconia electrically-fused cast refractory according to any one of Embodiments 1 to 6, wherein the mass content of Na₂O is 0.5 to 1.2% by mass.
<Embodiment 8>
   The high zirconia electrically-fused cast refractory according to any one of Embodiments 1 to 7, wherein the mass content of B₂O₃ is 0.01 to 0.6% by mass.
<Embodiment 9>
   The high zirconia electrically-fused cast refractory according to any one of Embodiments 1 to 8, wherein, during a process of temperature rise from 200 °C. to 1500 °C., a temperature at which an expansion rate of the refractory is maximized is present within 1300 °C. to 1500 °C.
<Embodiment 10>
   The high zirconia electrically-fused cast refractory according to any one of Embodiments 1 to 9, wherein, during a process of temperature drop from 1500 °C, ZrO₂ crystals shrink without being transformed from tetragonal to monoclinic.
<Embodiment 11>
   The high zirconia electrically-fused cast refractory according to any one of Embodiments 1 to 10, which is for a glass melting furnace.

### [Advantageous Effects of Invention]

According to the present invention, it is possible to provide an improved high zirconia electrically-fused cast refractory. In particular, when the high zirconia electrically-fused cast refractory of the present invention which is easy to mass-produce industrially is used in a glass melting furnace, a joint opening is suppressed at a contact site between refractories; the formation of zircon crystal is also suppressed; the residual volume expansion does not become extremely large even when zircon crystals are formed; and since cracks do not occur in the refractory, it is possible to provide a refractory having high corrosion resistance to glass; and thus, long-term operation is possible, which is industrially very beneficial.

### [Brief Description of Drawings]

[Fig. 1]

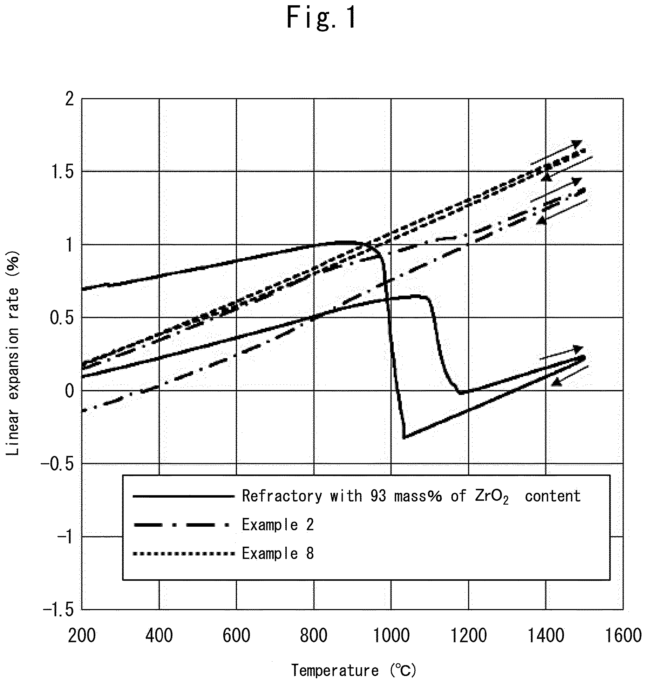

   FIG. 1 is a diagram of measurements of thermal expansion rates according to a high zirconia electrically-fused cast refractory having 93% by mass of zirconia (0.24% by mass of Y₂O₃ content) and according to Examples 2 and 8.
[Fig. 2]

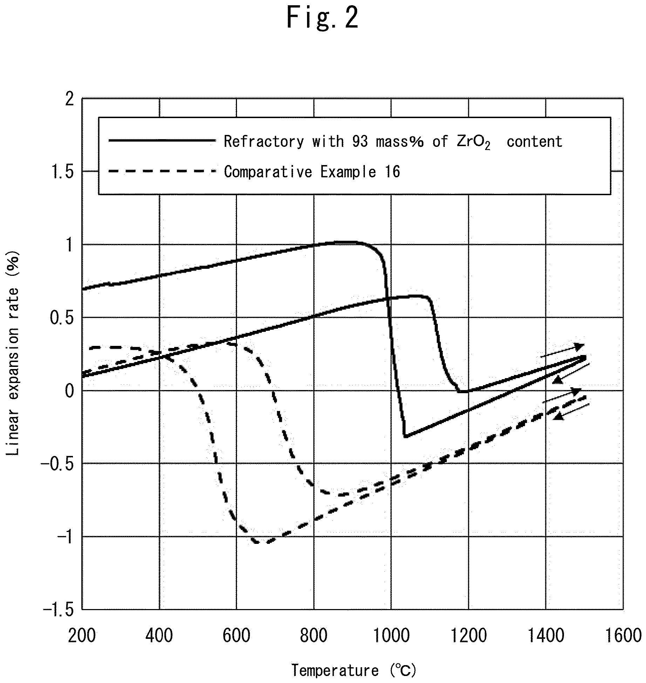

   FIG. 2 is a diagram of measurements of thermal expansion rates according to a high zirconia electrically-fused cast refractory having 93% by mass of zirconia (0.24% by mass of Y₂O₃ content) and according to Comparative Example 16.
[Fig. 3]

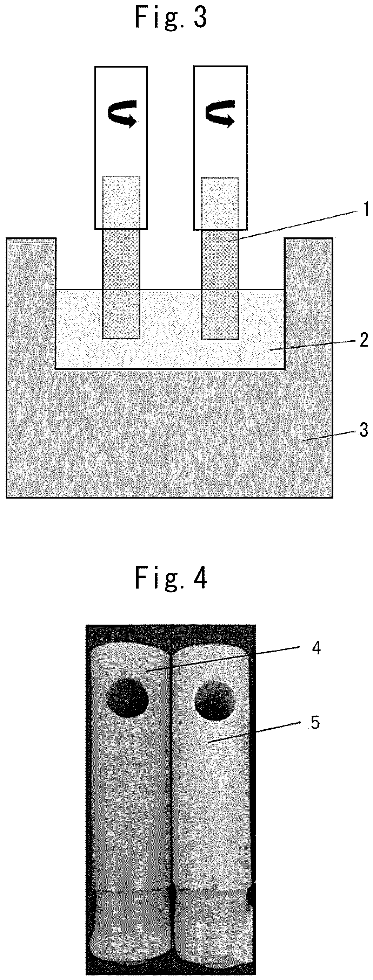

   FIG. 3 is a diagram of an apparatus used to evaluate corrosion resistance.
[Fig. 4]
   FIG. 4 is a photograph of the outer appearance of samples after evaluation of corrosion resistance.
[Figure 5A] Figure 5A is a photograph of a microstructure of a high zirconia electrically-fused refractory having 93 mass% zirconia (Y₂O3 content 0.24 wt%), after evaluation of corrosion resistance.
[Figure 5B] Figure 5B is a photograph of a microstructure of the high-zirconia electrically-fused cast refractory according to Example 1, after evaluation of corrosion resistance.

### [Description of Embodiments]

As a result of intensive studies, the inventors of the present invention have found that the problem of the present invention can be solved by a refractory having ZrO₂ and HfO₂ in total of more than 80% by mass and less than or equal to 92% by mass, in which the contents of each of the components Al₂O₃, SiO₂, Na₂O, K₂O, B₂O₃, MgO, CaO, P₂O₅, Fe₂O₃, and TiO2 are specified to a specified range, and further the content of Y₂O₃ is specified to more than 4% by mass and less than or equal to 9% by mass. More specifically, it has been found that with this composition, all or almost all, not part, of ZrO₂ crystal phases can be transformed to tetragonal, and as a consequence, it is possible to substantially eliminate the reversible transformation of monoclinic and tetragonal crystal phases of ZrO₂ crystal, and thereby also eliminate an abrupt volume change. Further, it has been found that, during a process of temperature rise from 200 °C. to 1500 °C., if a temperature at which the expansion rate of a refractory is maximized is present within 1300 °C. To 1500 °C., the maximum expansion portion, which was present between the outer-side face and the inner-furnace-side face in the case of a conventional high zirconia electrically-fused cast refractory, is able to be moved to the inner-furnace-side which is in contact with the molten glass, and as a result of which, the joint opening at a contact site between refractories is completely or substantially completely suppressed.

In other words, with Y₂O₃ content being more than 4% by mass and 9% by mass or less, the reversible transformation of monoclinic and tetragonal crystal phases of ZrO₂ is eliminated or substantially eliminated, which reduces or eliminates the stress caused by a volume change due to the transformation of ZrO₂ crystals, even if the transformation temperature of the ZrO₂ crystal phase is shifted to a lower temperature side. As a result, the formation of cracks at the time of manufacturing a refractory can be suppressed, the industrial mass production becomes easier, the joint opening at the time of use of a refractory in a glass melting furnace can also be suppressed, and the corrosion resistance to glass is increased. In addition, in such a refractory, ZrO₂ crystals shrink without being transformed from tetragonal to monoclinic during the process of temperature drop from 1500°C. Therefore, when subjected to heating or thermal cycles during the operation of a glass melting furnace, even if zircon crystals are formed, the reversible transformation of monoclinic and tetragonal crystal phases of ZrO₂ is eliminated or substantially eliminated during the processes of temperature rise and temperature drop, and as a result, it has been found that it is possible to provide a high zirconia electrically-fused cast refractory in which cracks do not occur.

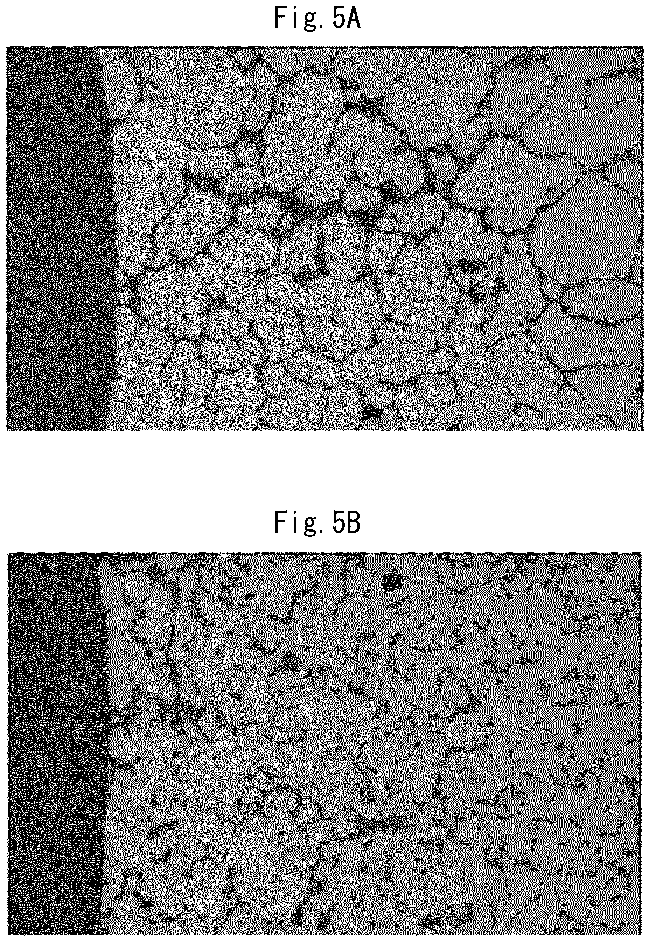

In addition, it has been found that, although the increase of Y₂O₃ content results in a relative decrease of ZrO₂ concentration, Y₂O₃ play the same or similar role to that of ZrO₂ due to the formation of a solid solution of Y₂O₃ in ZrO₂, and thus the refractory can have the same corrosion resistance as that of the conventional high zirconia electrically-fused cast refractory having 93 to 94 % by mass of ZrO₂. It has also been found that ZrO₂ particles easily form a three-dimensional network with each other via nodules which are formed during thermal retention by crystallization of Y₂O₃ partially comprised in glass phase, or via nodules of high concentration Y₂O₃ which are formed by the elution of Y₂O₃ into glass phase from the solid solution of Y₂O₃ in ZrO₂, and as a result of which, the corrosion resistance is improved (see Figure 5B).

### <<Components>>

Hereinafter, each component of the refractory according to the present invention will be described. "Substantially free" refers to less than 0.01% by mass.

### <ZrO₂>

The amount of ZrO₂ contained in the high-zirconia electrically-fused cast refractory can be determined in a relative manner based on the contents of the other components. However, if the content of ZrO₂ is too high, the amounts of other components become relatively low.

In addition, the zircon raw material, ZrO₂ raw material used as a raw material of a high zirconia electrically-fused cast refractory, inevitably contains 1 to 2% by mass of HfO₂. HfO₂ does not volatilize during manufacturing, and thus it is also included in a high-zirconia electrically-fused refractory. Furthermore, since it is a stable oxide as in the case of ZrO₂ and has the same effects as ZrO₂, it is also possible to treat the content of ZrO₂+HfO₂ as the content of ZrO₂.

Accordingly, the total content of ZrO₂ and HfO₂ in the present invention is more than 80% by mass and 92% by mass or less, preferably, 81 to 92% by mass, 82 to 92% by mass, 83 to 92% by mass, 84 to 92% by mass, 85 to 92% by mass, or 86 to 92% by mass, and more preferably, 86 to 91% by mass, 86 to 90% by mass, or 86 to 89% by mass.

### <SiO₂>

SiO₂ is the main component of the glass phase in the refractory of the present invention.

The content of SiO₂ is from 1.5 to 10% by mass. More preferably, it is 1.5 to 9.0 % by mass, 1.5 to 8.0 % by mass, or 1.5 to 7.0 % by mass, further more preferably, 2.0 to 7.0 % by mass, 3.0 to 7.0 % by mass, 4.0 % by mass to 7.0 % by mass, 4.0 % by mass to 6.5 % by mass, or 4.0 to 6.0 % by mass.

Even if the shrinkage at the time of the transformation of monoclinic to tetragonal crystal phases is substantially eliminated by the formation of solid solution of Y₂O₃ in ZrO₂ crystals, the shrinkage can still occur at the time of monoclinic to tetragonal crystal phase transformation of ZrO₂ crystals, albeit the rate of shrinkage being small. In this case, if the content of SiO₂ is less than 1.5 % by mass, the amount of the glass phase to be formed is reduced, and thus the stress generated by a volume change accompanying the transformation of ZrO₂ crystals cannot be sufficiently mitigated, and as a result, the refractory becomes more prone to cracking. When the content of SiO₂ is more than 10% by mass, ZrO₂ content is relatively reduced, and as a result the corrosion resistance may be lowered.

### <Al₂O₃>

With regard to Al₂O₃, in the present invention, even when a raw material thereof is not directly added, it does not significantly affect industrial mass production. However, since Al₂O₃ is effective in suppressing the formation of zircon crystals, the inclusion of Al₂O₃ is desirable. However, if it exceeds 2.5% by mass, crystals of corundum or mullite may be precipitated in the glass phase at the time of manufacturing or at the time of heating. However, even if the crystals are precipitated, since the monoclinic to tetragonal crystal phase transformation is eliminated or substantially eliminated by the formation of solid solution of Y₂O₃ in ZrO₂ crystals, the existence of these reaction products, which can be a cause of crack formation in the production of a high zirconia electrically-fused cast refractory, do not significantly affect the industrial mass production.

In the present invention, the content of Al₂O₃ is 0.2 to 3.0 % by mass. Since Al₂O₃ is present as an impurity of ZrO₂ raw material and SiO₂ raw material, even if it is not newly added, it is generally contained in an amount of 0.2 % by mass or more. In addition, if the content is more than 3.0% by mass, ZrO₂ content is relatively reduced, and the corrosion resistance may be lowered.

Accordingly, the content of Al₂O₃ is 0.2 to 3.0 % by mass, more preferably, 0.3 to 3.0 % by mass, 0.3 to 2.50 % by mass, 0.4 to 3.0 % by mass, or 0.4 to 2.5 % by mass, still more preferably, 0.4 to 2.0 % by mass, 0.4 to 1.5 % by mass, 0.5 to 1.5 % by mass, or 0.5 to 1.2 % by mass.

### <Na₂O>

Na₂O functions as a modification oxide in the glass phase. It is also an essential component for reducing the viscosity of the glass phase, for reducing the occurrence of cracks during production of a high zirconia electrically-fused cast refractory, and for facilitating industrial mass production. Further, Na₂O is effective in significantly suppressing the formation of zircon crystals in glass phase of a refractory. However, if the content exceeds 2.0 % by mass, the softening point of the glass phase is significantly lowered, and thus a refractory may be easily deformed and the corrosion resistance may be lowered.

Accordingly, the content of Na₂O is 0.05-2.0% by mass, more preferably, 0.2 to 2.0% by mass, 0.2 to 1.8% by mass, 0.3 to 1.8% by mass, or 0.4 to 1.8% by mass, even more preferably, 0.5 to 1.7% by mass, 0.6 to 1.7% by mass, 0.7 to 1.7% by mass, or 0.5 to 1.4% by mass, 0.5 to 1.2% by mass, or 0.5 to 1.0% by mass.

### <K₂O>

K₂O is 1.0% by mass or less, preferably 0.5% by mass or less, more preferably 0.1% by mass or less, and particularly preferably the refractory is substantially free of K₂O. "substantially free" indicates less than 0.01% by mass. The lower limit of K₂O content is not particularly limited, but may be 0.001% by mass or 0.0001% by mass.

### <B₂O₃>

B₂O₃ does not have a significant effect on industrial mass production even if it is not included in the refractory in the present invention. However, B₂O₃ is effective in suppressing cracking during production even at a lower content, and may facilitate industrial mass production. On the other hand, if it exceeds 1.5 % by mass, the amount of ZrO₂ content is relatively reduced, and the corrosion resistance of a high zirconia electrically-fused cast refractory may be lowered. Further, if the content is excessively high, it may facilitate the formation of zircon crystals.

Accordingly, the content of B₂O₃ is 0 to 1.5% by mass, more preferably, 0 to 1.2% by mass, 0 to 1.0% by mass, still more preferably, 0.01 to 0.8% by mass, 0.01 to 0.6% by mass, 0.01% by mass or more and less than 0.58% by mass, 0.01 to 0.5% by mass, 0.01 to 0.4% by mass, or 0.01 to 0.2% by mass.

### <Y₂O₃>

Y₂O₃ is the most important component in the present invention. It is considered that, when the Y₂O₃ content is more than 4% by mass and 9% by mass or less, all or almost all, but not part, of ZrO₂ crystal phase is transformed to tetragonal, which substantially eliminates the reversible transformation of monoclinic and tetragonal crystals phases of ZrO₂ crystal , and thus an abrupt volume change at the time of the transformation of monoclinic and tetragonal ZrO₂ crystals is also substantially eliminated, so that the effect of crack suppression at the time of manufacturing can be obtained, and as a result of which it is possible to facilitate industrial mass production. If Y₂O₃ content is too high, the stabilization occurs toward a cubic ZrO₂, which may cause cracking during production. If Y₂O₃ content is too small, the ratio of monoclinic ZrO₂ crystal becomes higher than tetragonal, and an abrupt volume change increases during the transformation of monoclinic and tetragonal ZrO₂ crystals, which may cause crack formation during manufacturing.

Accordingly, the content of Y₂O₃ is more than 4.0 % by mass and 9.0 % by mass or less, more preferably, more than 4.0 % by mass and 8.5 % by mass or less, more than 4.0 % by mass and 8.0 % by mass or less, more than 4.0 % by mass and 7.5 % by mass or less, still more preferably, 4.5 to 7.5 % by mass, 4.5 to 7.0 % by mass, 4.5 to 6.5 % by mass, 4.5 to 6.0 % by mass, more than 4.5 % by mass and 6.0 % by mass or less, or 5.0 to 6.0 % by mass.

### <MgO>

Since MgO is present as an impurity in ZrO₂ raw material, care must be taken in selecting the raw material. In addition, if the content is high, it may facilitate the formation of zircon crystals. In the present invention, although it is not added intentionally, it is preferably 0.1 % by mass or less, and it is more preferable that the refractory is substantially free of MgO.

### <CaO>

When CaO is contained in a certain amount, the viscosity of melt of a high zirconia electrically-fused cast refractory can be lowered, and a stable glass phase can be formed. If the refractory is substantially free of CaO, the glass phase becomes very unstable, and cracks are generated during production. In other words, the occurrence of cracks makes the mass production impossible. Therefore, it is essential that CaO is contained.

Further, CaO is present as an impurity of a ZrO₂ raw material and a zircon raw material as a ZrO₂ source. Therefore, if it is desired that the content in a refractory is less than 0.01%, it is required to use a high-purity reagent as a raw material, which is unsuitable for mass production since it entails very expensive cost. Accordingly, the content is 0.01% by mass or more, preferably 0.02% by mass or more. However, care must be taken since it promotes the formation of zircon crystals when it is contained more than a certain amount. In the present invention, the reversible transformation of monoclinic and tetragonal crystal phases of ZrO₂ crystal is substantially eliminated, and thus it can be said that cracks do not occur in the refractory even if the zircon crystals are formed. However, the present invention may also include a refractory in which shrinkage occurs during the monoclinic to tetragonal crystal phase transformation of ZrO₂ crystal (although the shrinkage rate is small). Therefore, it is necessary to suppress the formation of zircon crystals.

Accordingly, CaO content is preferably 0.02% by mass to 0.3% by mass, more preferably, 0.02% by mass to 0.2% by mass, or 0.02% by mass to 0.1% by mass, particularly preferably, 0.03% by mass to 0.2% by mass, or 0.03% by mass to 0.1% by mass.

Further, the total content of MgO and CaO is 0.02 to 0.4% by mass, preferably 0.02 to 0.35% by mass.

### <Fe₂O₃ and TiO₂>

Fe₂O₃ and TiO2 are impurities of ZrO₂ raw materials and zircon raw materials. Since these oxides can cause coloration and foaming of molten glass, the contents of these oxides need to be limited. The total content of Fe₂O₃ and TiO₂ is 0.5 % by mass or less, preferably 0.3 % by mass or less, and more preferably 0.2 % by mass or less. The lower limit thereof is not particularly limited, but the total content of Fe₂O₃ and TiO2 may be 0.01% by mass or more.

### <P₂O₅>

P₂O₅ is one of the components constituting glass, contributes to the formation of a low-melting-point glass, and is effective in adjusting the viscosity of melt during production of a high zirconia electrically-fused cast refractory. However, when P₂O₅ is contained, since it significantly promotes the formation of zircon crystals, it is preferable that the refractory of the present invention does not substantially contain P₂O₅. Accordingly, the content of P₂O₅ is preferably 0.04% by mass or less, more preferably 0.02% by mass or less.

### <<Expansion rate (Thermal expansion rate) of refractory>>

Expansion rate of a refractory can be evaluated based on the expansion rate during the process of temperature rise, for example in the temperature range of 200 °C. to 1500 °C., at every 100°C. Further, the expansion rate of a refractory can be evaluated based on the expansion rate during the process of temperature drop, for example in the temperature range of 1500 °C. to 300 °C., at every 300 °C.

In the process of temperature rise from 200 °C. to 1500 °C., if a temperature at which the expansion rate of a refractory is maximized is within the range of 1300 °C. to 1500 °C., the maximum expansion portion of a refractory, which existed in the case of prior art between the outer-side face and the inner-furnace-side face of a high zirconia electrically-fused cast refractory, can exist at the inner-furnace side which is in contact with the molten glass, and as a result of which it is possible to completely or substantially completely suppress joint openings at contact sites between refractories. Accordingly, in the process of temperature rise from 200 °C. to 1500 °C., it is preferable that a temperature at which the expansion rate of a refractory is maximized is present within 1300 °C. to 1500 °C.

Further, with respect to the expansion rate of a refractory during the process of temperature drop, it is preferable that ZrO₂ crystals shrinks without being transformed to monoclinic crystals. When the ZrO₂ crystal is transformed from tetragonal to monoclinic, it is accompanied by an abrupt volume expansion. Therefore, in the case where zircon crystals are formed, the glass phase is difficult to absorb this abrupt volume expansion due to the relative reduction of the glass phase, and therefore the strength of the refractory is lowered and crack may be formed. Accordingly, in the process of temperature drop from 1500 °C. to 300 °C., it is preferable that a temperature at which the expansion rate of a refractory is maximized is present within 1200 °C. to 1500 °C. In this case, it is considered that the transformation of ZrO₂ crystals from tetragonal to monoclinic does not occur or is suppressed.

According to a preferred embodiment of the refractory of the present invention, during the process of temperature drop (the process of cooling) from 1500°C, ZrO₂ crystals shrink without being transformed from tetragonal to monoclinic. This is determined by measuring the expansion rate of a refractory at every 300 °C. during the process of temperature drop (cooling process) from 1500 °C., and by determining that there is no increase in the expansion rate corresponding to the transformation from tetragonal to monoclinic.

The expansion rate (linear expansion rate) of a refractory in the process of temperature rise and temperature drop can be measured respectively according to JIS R 2207-3 using a thermomechanical analyzer (for example, a TMA4000SA manufactured by NETZSCH Corporation) on a sample extracted from the refractory using a diamond drill.

### [Examples]

The high zirconia electrically-fused cast refractory according to a preferred embodiment of the present invention will be described. The present invention is not limited to these examples.

### <<Examples 1 to 14 and Comparative Examples 15 to 24>>

The refractories according to Examples 1 to 14 and Comparative Examples 15 to 24 were prepared respectively, and the physical properties, etc., thereof were evaluated.

### <Production of refractories>

To a ZrO₂ raw material obtained by desiliconizing zircon sand, raw materials of oxides SiO₂, Al₂O₃, Na₂O, B₂O₃, Y₂O₃, etc., and a nitrate raw material, etc., were added in order to achieve a predetermined ratio in terms of oxide. After they were mixed, they were melted in an electric arc furnace. After melting for a predetermined period of time, it was cast in a mold, buried in a annealing material together with the mold, and slowly cooled to room temperature.

The mold used was made of graphite and has an article portion having a dimension of 100mm×300mm×300mm, on top of which a hot-top portion having an inner dimension of a 140mm×235mm×350mm was integrally connected.

After the annealing, the mold and the cast article were removed from the silica sand which was an annealing material, and then the mold and the cast article were separated. The product portion of the cast article was separated from the hot-top portion, in order to obtain a desired high zirconia electrically-fused cast refractory.

### <Evaluation>

The refractories of Examples 1 to 14 and Comparative Examples 15 to 24 produced were evaluated for physical properties, etc., as follows. Table 1 shows the compositions and characteristics of the high zirconia electrically-fused cast refractories according to Examples 1 to 14, and Table 2 shows the expansion rates during the process of temperature rise and the process of temperature drop. Further, Table 3 shows the compositions and characteristics of the high zirconia electrically-fused cast refractories according to Comparative Examples 15 to 24, and Table 4 shows the expansion rate during the process of temperature rise and the process of temperature drop. Amounts of each of the components in Table 1 and Table 3 are in units of % by mass.

### <Component analysis>

Analysis of each component was performed by wavelength dispersive-type X-ray fluorescence analysis. Note that B₂O₃ content was analyzed by high-frequency inductively coupled plasma-emission spectroscopy. However, the present invention is not limited to these analytical methods, and other analytical methods may be used.

### <Crack>

With regard to cracks during production, firstly, the state of a product was observed after removed from the annealing material. Thereafter, the product was cut half and the internal state was observed and evaluated according to the following criteria.
+++: Refractory with no crack on the surface and inside of a block, or no cracks on the surface of a block and less than 50 mm length of crack on the inside of a block;
++: Refractory with no crack on the surface of a block but with 50mm or more length of crack on the inside of a block;
+: Refractory with crack over two surfaces of a block and with 50mm or more length of crack on the inside of a block;
-: Refractory with crack over three or more surfaces of a block; or refractory broken due to cracks at the time when removed from the annealing material.

### Bulk Density and Porosity

For bulk density and porosity, a 23mm-diameter of a drill core was extracted at a portion 50 mm from the mold-contact-bottom face of 300mm×300mm face and 50 mm from the mold-contact-side face, and then the bulk density and the apparent porosity of a sample having 90 mm length were calculated according to Archimedes method, wherein the sample being examined 5 mm inside from the cast surface.

The bulk density of a refractory is preferably in 5.10 g/cm³ to 5.70 g/cm³. The porosity of a refractory is preferably 5.00% or less or 3.00% or less (the lower limit of the porosity is not particularly limited, but may be 0.80%).

### Expansion rate (thermal expansion rate)

The expansion rate (linear expansion rate) of a refractory was measured according to JIS R 2207-3. As a samples for evaluating the expansion rate of a refractory, a 5 mm-diameter drilled core was cut at a position 20 mm from the mold-contact-bottom face of 300mm×300mm face and 130 mm with respect to the mold-contact-side face, and then each portion 40 mm from the cast surfaces was trimmed, in order to prepare a sample having a 20 mm-length-central portion. On the sample extracted from the refractory, the expansion rate was measured using a thermomechanical analyzer. The results for Examples 1-14 and Comparative Examples 15-24 are shown in Tables 2 and 4, respectively. In addition, FIG. 1 shows thermal expansion rates measured for a high zirconia electrically-fused-cast refractory having 93% by mass of zirconia (0.24% by mass of Y₂O₃ content) and for Examples 2 and 8. FIG. 2 shows thermal expansion rates measured for a high zirconia electrically-fused cast refractory having 93% by mass of zirconia (0.24% by mass of Y₂O₃ content) and for Comparative Example 16.

### <Corrosion resistance>

A drill core of 22mm diameter was cut out from a position 50mm with respect to the mold-contact-bottom face of 300mm×300mm face and the mold-contact-side face, respectively, and each portion 5mm from the cast surfaces was trimmed, and then, a 90-mm-length central portion thereof was used as a sample for evaluating the corrosion resistance.

FIG. 3 shows a diagram of the device used to evaluate corrosion resistance. The corrosion resistance was evaluated using an alkali-free glass in the following manner. The composition of the alkali-free glass used in this test is 62% by mass of SiO₂, 16% by mass of Al₂O₃, 2% by mass of B₂O₃, 9% by mass of CaO, 2% by mass of SrO, and 9% by mass of BaO.

### Corrosion resistance test using alkali-free glass

A sample to be evaluated and an alumina guide tube to fix the sample were perforated, and a refractory pin was inserted in order to fix the sample to be evaluated to the alumina guide tube. The refractory pin and the alumina guide tube were fixed using a heat-resistant adhesive. One end of the alumina guide tube was connected to the sample to be evaluated, and the other end was connected to the test device.

The temperature of a crucible (reference sign 3 in FIG. 3) of a high zirconia electrically-fused cast refractory containing the alkali-free glass (reference sign 2 in FIG. 3) was raised to a temperature of 1700°C., and after that, the test device connected to the alumina guide tube was started, and the sample to be evaluated was rotated at 40rpm. The sample rotating at 40 rpm (reference sign 1 in FIG. 3) were contacted with alkali-free glasses (reference sign 2 in FIG. 3) heated to 1700°C. The alkali-free glass and the sample to be evaluated were contacted for 168 hours at a temperature of 1700°C., and after that, the sample was pulled from the refractory crucible, and the glass adhered to the sample to be evaluated was removed.

In the sample pulled from the crucible, the erosion degree was measured using a caliper at the portion most eroded by the glass. FIG. 4 shows the outer appearance after corrosion resistance test for a sample (reference sign 4 in FIG. 4) having a ZrO₂ content of 93% by mass (Y₂O₃ content of 0.24% by mass) and for a sample (reference sign 5 in FIG. 4) according to Example 1.

For comparison, the degree of erosion of a high-zirconia electrically-fused cast refractory with a ZrO₂ content of 93% by mass (Y₂O3 content of 0.24% by mass) was used as a standard degree of erosion, and the degree of erosion was evaluated on the basis of the following criteria.
++ : The degree of erosion is smaller than the standard;
+ : The degree of erosion is the same as the standard;
- : The degree of erosion is larger than the standard.

For a refractory having a ZrO₂ content of 93% by mass (Y₂O₃ content of 0.24% by mass) and for a refractory according to Example 1, photographs of microstructures after evaluation of corrosion resistance were taken. The respective photographs are shown in Figures 5A and 5B.

### <Residual volume expansion rate after thermal cycle test>

A drill core of 45mm diameter was cut out at a position 50 mm from the mold-contact-bottom face of 300 mm × 300 mm face and the mold-contact-side face, respectively, and each portion 25mm from the cast surfaces was trimmed, and a 50-mm-length central portion was used as the sample for evaluation.

The sample is heated to 600°C. at a heating rate of 3°C. /min and held for 1 hour. Thereafter, the temperature is raised to 1450 °C. at a heating rate of 3 °C./min, and held at 1450 °C. for 1 hour. After holding for 1 hour, the temperature is dropped to 600 °C. at a cooling rate of 3 °C./min, and held for 1 hour. Considering that the holding at 600°C. for 1 hour and the holding at 1450°C. for 1 hour constitute one cycle, the heat cycles are repeated 20 times. After repeating the 20 thermal cycles, the residual volume expansion rate was calculated, based on the difference in volumes of the evaluated sample which were determined from the dimensions measured before and after the heating.

The residual volume expansion rate calculated in this way is preferably 2% or less. More preferably it is 1% or less. If the residual volume expansion rate exceeds 5%, a part of the sample will start to be pulverized, which is not desirable. If the residual volume expansion rate exceeds 10%, the sample will start to be pulverized as a whole, which is even less desirable.

### <<Results of evaluation>>

Examples 1 to 14 are refractories having a Y₂O₃ content of more than 4% by mass. As can be seen in Table 2 (and FIG. 1), during the process of temperature rise from 200 °C. to 1500 °C., the temperature at which the expansion rate of the refractory is maximized was within the range of 1300°C. to 1500°C., in all of Examples 1 to 14. In addition, during the process of temperature drop between 300°C. to 1500°C., the temperature at which the expansion rate of the refractory is maximized was within the range of 1200°C. or higher, in all of Examples 1 to 14. In any of Examples 1-14, no abrupt volume change was observed in the vicinity of the transformation temperature of ZrO₂ crystal phase. In other words, it was demonstrated that, in the refractories of Examples 1 to 14, since the reversible transformation of monoclinic and tetragonal ZrO₂ crystal phases is eliminated or almost eliminated, an abrupt volume change is mitigated or disappears.

Examples 7 and 8 are refractories having a relatively lower content of SiO₂, which is a main component of glass phase. Without wishing to be bound by theory, it is indicated that since the reversible transformation of monoclinic and tetragonal crystal phases of ZrO₂ was eliminated or substantially eliminated through the effect of Y₂O₃, the crystal phase transformation which accompanies an abrupt volume change is mitigated, and as a result, good resistance to thermal cycles is obtained even when the SiO₂ content is relatively low.

Figure 5A is a photograph of a microstructure of a high zirconia electrically-fused cast refractory of 93 % by mass zirconia after evaluation of corrosion resistance. This refractory contains 0.24% by mass of Y₂O₃. Fig. 5B is a photograph of a microstructure of a high-zirconia electrically-fused cast refractory according to Example 1 after evaluation of corrosion resistance (Y₂O3 content = 5.67 % by mass). As suggested from these photographs, it is considered that, in a refractory having a Y₂O₃ content of more than 4% by mass, ZrO₂ grains can easily form a network with each other via nodules formed by a crystallization of Y₂O₃ which is partially contained in the grass phase, or via high concentration Y₂O₃ nodules formed by the elution of Y₂O₃ from the solid solution of Y₂O₃ in ZrO₂. Therefore, even if the porosity is relatively high as in Examples 7, 8, and 11, the corrosion resistance is comparable to or higher than that of a high zirconia electrically-fused cast refractory having a ZrO₂ content of 93% by mass.

In Examples 5 and 11, the components which promote the formation of zircon crystals (CaO or B₂O₃) were increased. However, when Y₂O₃ content exceeds 4% by mass, even if zircon crystals are formed, the transformation of monoclinic to tetragonal crystal phases of ZrO₂ crystals which accompanies an abrupt volume change is suppressed, and thus good resistance to thermal cycles is obtained, wherein the residual expansion rate being 2% by mass or less.

As is apparent from Table 1, with regard to the high zirconia electrically-fused cast refractories of Examples 1 to 14, after they were removed from the annealing material, the lengths of the cracks were short in appearance or there was no crack. Therefore, even if the cracks are occurred, industrial mass production is possible by performing partial trimming. Therefore, they can be used as a refractory which suppresses the joint opening; suppresses the residual expansion rate after thermal cycles; has a high corrosion resistance to glass; and has a long product life.

In Table 3, refractories not corresponding to the present invention are shown as comparative examples. All of the refractories according to Comparative Examples 15 to 24 exhibited poor quality in terms of crack formation during production. Further, some of the comparative examples showed poor quality in terms of corrosion resistance and/or residual volume expansion rate after thermal cycles.

Among the comparative examples, Comparative Examples 15 to 17 are refractories having a relatively low Y₂O₃ content, and Comparative Example 15 is a composition corresponding to Patent Document 4 (JP2013-514254A). Without wishing to be bound by theory, it is considered that, in these comparative examples, the temperature of monoclinic to tetragonal ZrO₂ crystal transformation is shifted to a lower temperature side due to a relatively lowY₂O₃ content, and since the viscosity of glass phase is high at a lower temperature side, an abrupt volume change of ZrO₂ cannot be mitigated, and as a consequence, the refractory was broken at the time when it was removed from the annealing material.

Conversely, Comparative Example 19 is a refractory having a relatively high Y₂O₃ content. In this comparative example, there is a possibility that, since a solid solution of Y₂O₃ in ZrO₂ crystals is formed and a part of them is stabilized as cubic ZrO₂ crystals, it became more prone to crack.

In the refractories according to Comparative Examples 18 and 20 to 24, it is considered that, although Y₂O₃ content is within the range of more than 4.0% by mass to 9.0% by mass, since the content of at least one of SiO₂, Al₂O₃, B₂O₃, Fe₂O₃, TiO2, MgO, CaO, K₂O and P₂O₅ is excessive or not enough, crack formation, etc., occurred.

The refractories according to these comparative examples is difficult to mass-produce industrially, and may be unsuitable for stable production.

As shown the results above, the high zirconia electrically-fused cast refractory of the present invention is very useful as a refractory for a glass melting furnace, which suppresses the erosion from glass due to joint opening; has high corrosion resistance; and exhibits good resistance to thermal cycles.

Further, although the high zirconia electrically-fused cast refractory of the present invention is very useful for glass melting furnace, it is not limited to an application for a glass melting furnace.

### [Table 1]

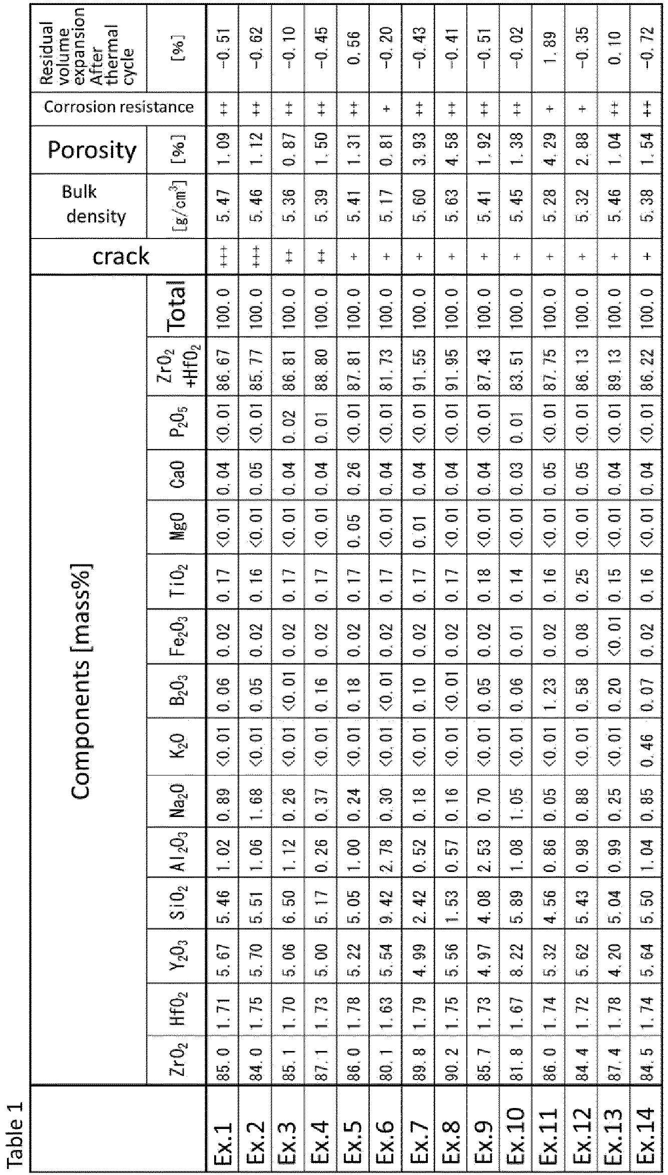

### [Table 2]

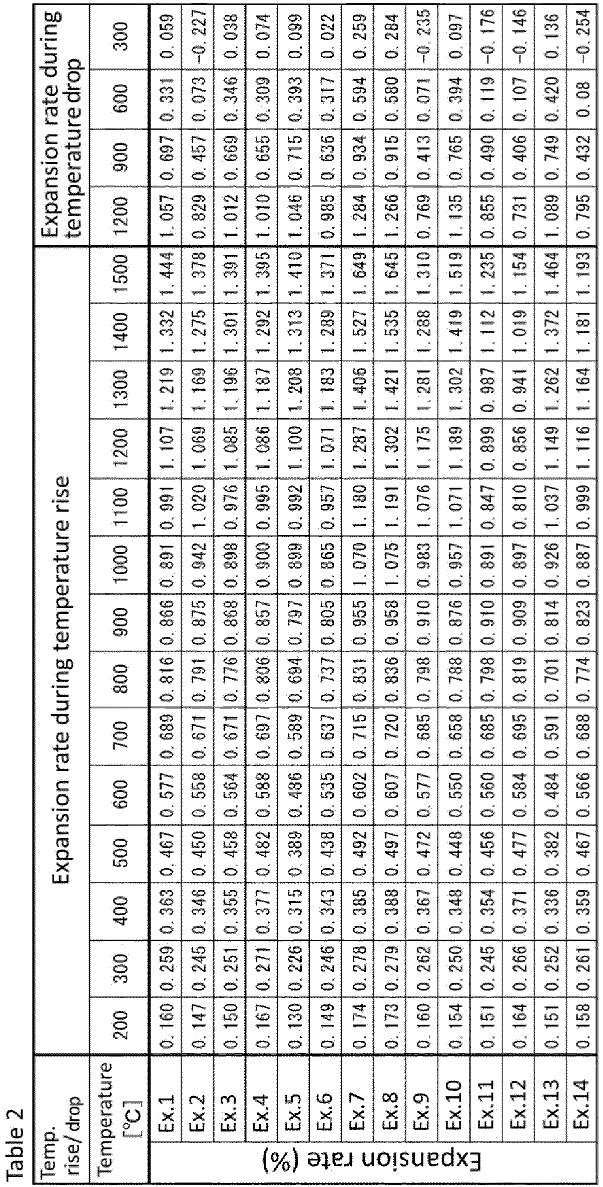

### [Table 3]

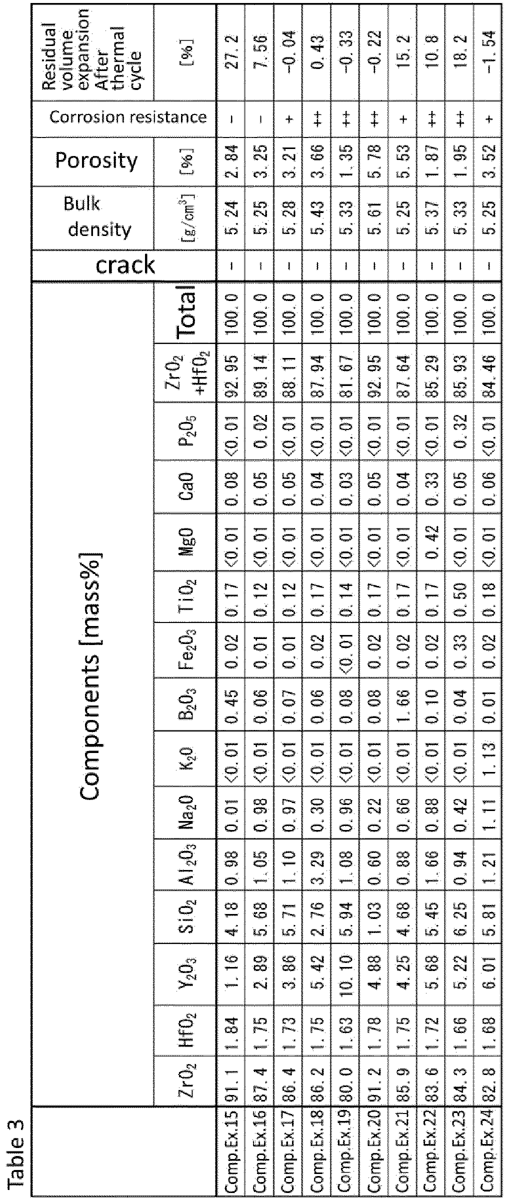

### [Table 4]

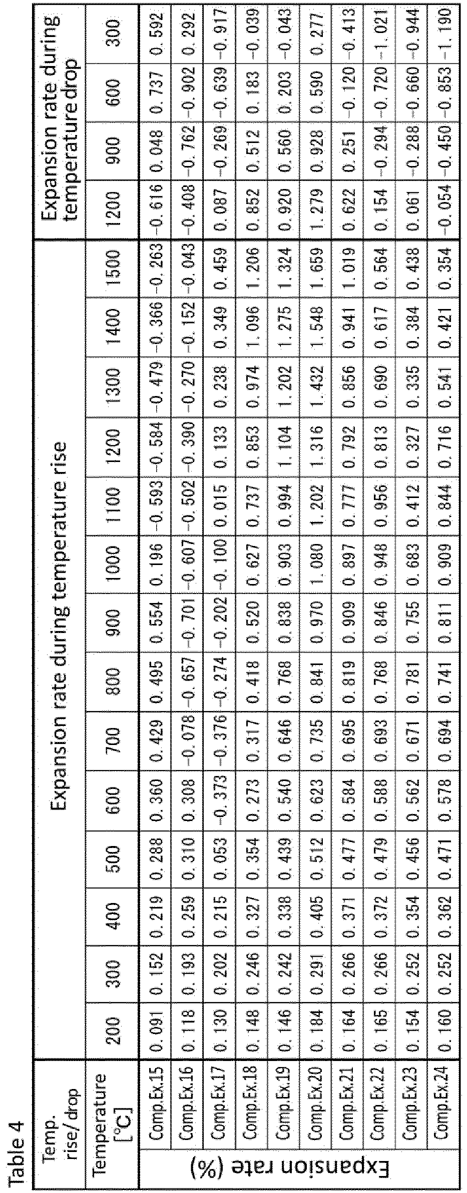

### [Reference Signs List]

1 samples for corrosion resistance evaluation
2 melted glass
3 crucible of high zirconia electrically-fused cast refractory
4 high zirconia electrically-fused cast refractory with 93 % by mass zirconia, after the corrosion resistance test
5 the refractory according to Example 1, after the corrosion resistance test

## Claims

1. A high zirconia electrically-fused cast refractory, wherein, as chemical components:
the sum of ZrO₂ and HfO₂ is more than 80% by mass and 92% by mass or less,
Al₂O3 is 0.2 to 3.0% by mass,
SiO₂ is 1.5 to 10% by mass,
Na₂O is 0.05 to 2.0% by mass,
K₂O is 1.0% by mass or less,
B₂O₃ is 0 to 1.5% by mass,
Y₂O₃ is more than 4.0% by mass and 9.0% by mass or less,
the sum of MgO and CaO is 0.02 to 0.4% by mass,
CaO is 0.01% by mass or more,
the sum of Fe₂O₃ and TiO₂ is 0.5% by mass or less,
P₂O₅ content is 0.04% by mass or less.

2. The high zirconia electrically-fused cast refractory according to claim 1, wherein, as chemical components:
the sum of ZrO₂ and HfO₂ is more than 80% by mass and 92% by mass or less,
Al₂O3 is 0.4 to 2.5% by mass,
SiO₂ is 1.5 to 7.0% by mass,
Na₂O is 0.3 to 1.8% by mass,
K₂O is 1.0% by mass or less,
B₂O₃ is 0 to 1.0% by mass,
Y₂O₃ is more than 4.0% by mass and 7.5% by mass or less,
the sum of MgO and CaO is 0.02 to 0.4% by mass,
CaO is 0.01% by mass or more,
the sum of Fe₂O₃ and TiO₂ is 0.5% by mass or less,
P₂O₅ content is 0.04% by mass or less.

3. The high zirconia electrically-fused cast refractory according to claim 1 or 2, wherein the mass content of Y₂O₃ is 4.5 to 7.5% by mass.

4. The high zirconia electrically-fused cast refractory according to claim 3, wherein the mass content of Y₂O₃ is more than 4.5% by mass and 6.0% by mass or less.

5. The high zirconia electrically-fused cast refractory according to any one of claims 1 to 4, wherein the mass content of SiO₂ is 4.0 to 6.5 % by mass.

6. The high zirconia electrically-fused cast refractory according to any one of claims 1 to 5, wherein the mass content of Al₂O₃ is 0.5 to 1.2% by mass.

7. The high zirconia electrically-fused cast refractory according to any one of claims 1 to 6, wherein the mass content of Na₂O is 0.5 to 1.2% by mass.

8. The high zirconia electrically-fused cast refractory according to any one of claims 1 to 7, wherein the mass content of B₂O₃ is 0.01 to 0.6% by mass.

9. The high zirconia electrically-fused cast refractory according to any one of claims 1 to 8, wherein, during a process of temperature rise from 200 °C. to 1500 °C., a temperature at which an expansion rate of the refractory is maximized is present within 1300 °C. to 1500 °C.

10. The high zirconia electrically-fused cast refractory according to any one of claims 1 to 9, wherein, during a process of temperature drop from 1500 °C, ZrO₂ crystals shrink without being transformed from tetragonal to monoclinic.

11. The high zirconia electrically-fused cast refractory according to any one of claims 1 to 10, which is for a glass melting furnace.
